# EUROPEAN PATENT SPECIFICATION

(11) **EP 0 475 777 B1**
(45) Date of publication and mention of the grant of the patent: **23.04.1997**
(21) Application number: 91308375.4
(22) Date of filing: 13.09.1991
(51) Int. Cl.: H02K 23/42, H02K 23/16, H02P 7/00, H02K 23/10

(54) **Rectifying motor lap-wound magnetic winding with adjustable commutating angle**
Magnetische Schleifenwicklung mit verstellbarem Kommutationswinkel für Stromwendermotoren
Enroulement magnétique imbriqué à angle de commutation ajustable pour moteur à collecteur

(30) Priority: 14.09.1990 US 583236
(43) Date of publication of application: 18.03.1992
(73) Proprietor: Yang, Tai-Her, Taipei (TW)
(72) Inventor: Yang, Tai-Her, Taipei (TW)
(74) Representative: Arthur, Bryan Edward

(56) References cited:
- EP-A- 0 266 672
- WO-A-89/06454
- DE-A- 3 940 849
- DE-C- 235 089
- DE-C- 1 130 731
- FR-A- 1 178 127
- US-A- 4 511 831

## Description

Conventional AC/DC rectifying motors, whether of the shunt excitation, series excitation or compound-excitation type, all include commutating magnetic poles or brushes and a magnetic polar axis, the maximum load being determined by the commutating angle.

DC-C-235,089 discloses a motor having main stator windings m and n and auxiliary stator windings p and q. The orientation of the magnetic axis can be controlled by varying the current in the auxiliary windings which may in series or parallel.

WO-A-89/06454 discloses a reversible motor or generator comprising a plurality of series-connected lap-wound field windings and a reversing switch connected to said field windings.

The present invention provides a reversible motor or generator as disclosed above in WO-A-89/06454 characterised in that said field windings comprise a main field winding and a first and second mutually overlapping auxiliary field windings, one of said auxiliary field windings being angularly offset in one direction relative to said main field winding and the other of said auxiliary field windings being angularly offset in the opposite direction relative to said main field winding and said reversing switch has a first switching position in which the armature of the motor or generator is connected in parallel with the first auxiliary field winding and the main auxiliary field winding, and a second switching position in which the armature of the motor or generator is connected in parallel with the second auxiliary field winding and in series with the first auxiliary field winding and the main field winding.

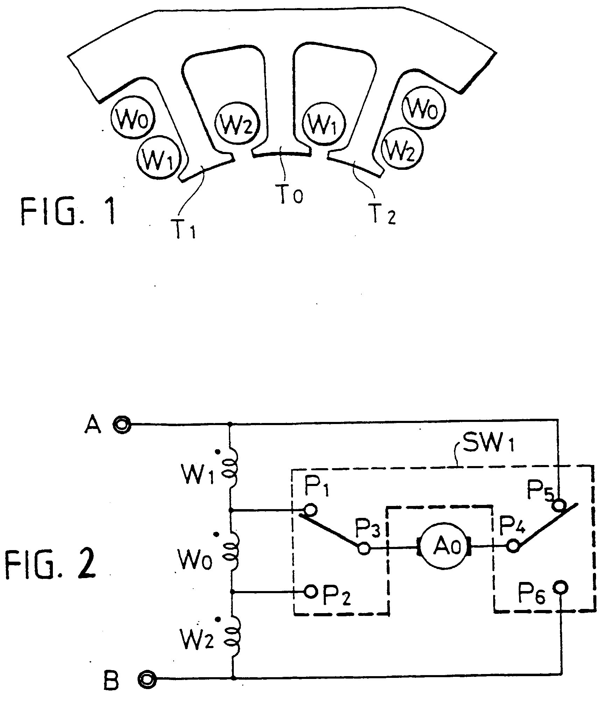

A preferred embodiment of the invention is described below by way of example only with reference to Figures 1 and 2 of the accompanying drawings, wherein Figure 1 shows a winding arrangement comprising a central main field winding and right and left lap-wound windings, and Figure 2 is a circuit diagram showing the winding arrangement of Figure 1 applied to a compound -excitation and reversible motor.

Referring to Figure 1, the pole arrangement comprises at least three tooth-shaped pole pieces T₀,
T₁ and T₂. Auxiliary pole pieces T₁ and T₂ may be the same size or of different sizes when necessary and the central pole piece T₀ may be larger, smaller or the same size as the pole pieces on either side.

A main winding W₀ is wound around the three pole pieces W₀ to W₂. The left auxiliary winding W₁ is wound around pole pieces T₀ and T₁ and the right auxiliary winding W₂ is wound around pole pieces T₀ and T₂.

The above arrangement is incorporated in the reversible motor shown in Figure 2, wherein control switch SW1 is a double knife switch having common connection terminals P3, P4 connected to the ends of armature AO. In one switch position (as shown in figure 2) the switch connects the terminals P3 and P4 to terminals P1 and P5 respectively which in turn are connected across the ends of auxiliary winding W1. In this configuration the winding W1 and armature AO are connected in parallel and the parallel combination is connected in series with windings W0 and W2.

The motor can be reversed by switching switch SW1 to a position in which terminals P3 and P4 are connected to terminals P2 and P6 respectively, which are connected across the ends of auxiliary winding W2.

The series-connected windings are connected between power supply terminals A and B.

In conclusion, the lap wound field winding arrangement of the present invention provides an adjustable commutation angle. Furthermore the excitation of an independent winding (not shown) may be changed in order to change the commutation angle continuously rather than discontinuously.

## Claims

1. A reversible motor or generator comprising a plurality of series-connected lap-wound field windings (W₀, W₁, W₂) and a reversing switch (SW₁) connected to said field windings, characterised in that said field windings comprise a main field winding (W₀) and first and second mutually overlapping auxiliary field windings (W₁, W₂) one of said auxiliary field windings being angularly offset in one direction relative to said main field winding and the other of said auxiliary field windings being angularly offset in the opposite direction relative to the said main field winding and said reversing switch has a first switching position in which the armature of the motor or generator is connected in parallel with the first auxiliary field winding and in series with the second auxiliary field winding and the main auxiliary field winding, and a second switching position in which the armature of the motor or generator is connected in parallel with the second auxiliary field winding and in series with the first auxiliary field winding and the main field winding.

2. A reversible motor or generator according to claim 1 which is a DC motor or a generator and wherein the commutation angle is adjustable.

## Patentansprüche

1. Umkehrmotor oder -generator, der eine Mehrzahl von in Reihe geschalteten schleifengewickelten Feldwicklungen (W₀, W₁, W₂) und einen mit den Feldwicklungen verbundenen Umkehrschalter (SW₁) aufweist, dadurch gekennzeichnet, daß die Feldwicklungen eine Hauptfeldwicklung (W₀) und erste und zweite, sich gegenseitig überlappende Hilfsfeldwicklungen (W₁, W₂) aufweisen, wobei eine der Hilfsfeldwicklungen winkelmäßig in einer Richtung relativ zu der Hauptfeldwicklung versetzt ist und die andere der Hilfsfeldwicklungen winkelmäßig in der entgegengesetzten Richtung relativ zu der Hauptfeldwicklung versetzt ist, und daß der Umkehrschalter eine erste Schaltposition, in der der Anker des Motors oder Generators parallel zu der ersten Hilfsfeldwicklung und in Reihe mit der zweiten Hilfsfeldwicklung und der Haupthilfsfeldwicklung geschaltet ist, und eine zweite Schaltposition aufweist, in der der Anker des Motors oder Generators parallel zu der zweiten Hilfsfeldwicklung und in Reihe mit der ersten Hilfsfeldwicklung und der Hauptfeldwicklung geschaltet ist.

2. Umkehrmotor oder -generator nach Anspruch 1, der ein DC-Motor oder ein Generator ist und bei dem der Kommutationswinkel einstellbar ist.

## Revendications

1. Moteur ou générateur réversible, comportant plusieurs enroulements inducteurs imbriqués (W₀, W₁, W₂), montés en série, et un commutateur inverseur (SW₁) connecté auxdits enroulement inducteurs, caractérisé en ce que lesdits enroulements inducteurs comprennent un enroulement inducteur principal (W₀) et un premier et un second enroulements inducteurs auxiliaires mutuellement imbriqués (W₁, W₂), l'un desdits enroulements inducteurs auxiliaires étant décalé angulairement dans une direction par rapport audit enroulement inducteur principal et l'autre desdits enroulements inducteurs auxiliaires étant décalé angulairement dans la direction opposée par rapport audit enroulement inducteur principal et ledit commutateur inverseur a une première position de commutation dans laquelle l'induit du moteur ou générateur est en parallèle avec le premier enroulement inducteur auxiliaire et l'enroulement inducteur auxiliaire principal, et une seconde position de commutation dans laquelle l'induit du moteur ou générateur est en parallèle avec le second enroulement inducteur auxiliaire et en série avec le premier enroulement inducteur auxiliaire et l'enroulement inducteur principal.

2. Moteur ou générateur réversible selon la revendication 1, qui est un moteur à courant continu ou un générateur, et dans lequel l'angle de commutation est réglable.
